# EUROPÄISCHE PATENTANMELDUNG

(11) **EP 0 742 404 A1**
(43) Veröffentlichungstag der Anmeldung: **13.11.1996**
(21) Anmeldenummer: 96810153.5
(22) Anmeldetag: 13.03.1996
(51) Int. Cl.: F16L 55/033

(54) **Rohrschelle mit elastischer Einlage**

(30) Priorität: 08.05.1995 DE 19516202
(71) Anmelder: HILTI Aktiengesellschaft, 9494 Schaan (LI)
(72) Erfinder: Carbonare, Martin, 6840 Götzis (AT)
(74) Vertreter: Wildi, Roland

(57) **Zusammenfassung**

Gummielastische Einlage für der Halterung von Rohren (5) und dergleichen Bauteile dienenden Rohrschellen (1), mit einem Basisbereich (3) zum Umgeben der Bauteile und einem Verankerungsbereich (4) zum Umgreifen der Rohrschelle (1). Die vom Verankerungsbereich (4) abgewandte Seite des Basisbereiches (3) weist in den Randbereichen jeweils einen in Längsrichtung verlaufenden, eine reibungsmindernde Beschichtung (16) aufweisenden Vorsprung (11) auf, der von wenigstens einem in Längsrichtung verlaufenden Hohrlraum (12, 13) durchsetzt ist.

## Beschreibung

Die Erfindung betrifft eine gummielastische Einlage für der Halterung von Rohren und dergleichen Bauteile dienenden Rohrschellen, wobei ein Basisbereich zum Umgeben der Bauteile und ein Verankerungsbereich zum teilweisen Umgreifen der Rohrschelle vorgesehen sind, sowie die vom Verankerungsbereich abgewandte Seite des Basisbereiches in den Randbereichen jeweils einen in Längsrichtung verlaufenden, eine reibungsmindemde Beschichtung aufweisenden Vorsprung aufweist und dass der Basisbereich mit in Längsrichtung verlaufenden Rippen versehen ist,

Für die Befestigung von Bauteilen, insbesondere von Rohren, werden Rohrschellen mit gummielastischen Einlagen verwendet. Gegenstände, die in den Bauteilen gehalten bzw. Medien, welche in Rohren transportiert werden, können bei thermischen Schwankungen eine Längenänderung der Bauteile bzw. Rohre bewirken. Um die Bewegungen der Bauteile, insbesondere von Rohren, in den entsprechenden Befestigungspunkten ermöglichen zu können, ist bereits eine Rohrschelle aus der DE-OS 40 29 090 bekannt, deren elastische Einlage aus einem Basisbereich und einem Verankerungsbereich besteht. Der Basisbereich umgibt mit einer Seite die Aussenwandung des Rohres und der Verankerungsbereich umgreift die Rohrschelle teilweise. Die das Rohr umgebende Seite des Basisbereiches weist in den Randbereichen jeweils einen, eine reibungsmindemde Beschichtung aufweisenden Vorsprung auf. Der Basisbereich ist mit in Längsrichtung verlaufenden Rippen versehen, die von den Vorsprüngen zum Rohr hin überragt werden.

Der Erfindung liegt die Aufgabe zugrunde, eine elastische Einlage für Rohrschellen zu schaffen, die neben guten Gleiteigenschaften gute Schalldämpfungseigenschaften gewährleistet Weiters soll die Einlage für mehrere Bauteile mit unterschiedlichen Durchmessem verwendbar sein.

Erfindungsgemäss wird die Aufgabe dadurch gelöst, dass die Vorsprünge der elastischen Einlage von wenigstens einem in Längsrichtung verlaufenden Hohlraum durchsetzt sind.

Die Hohlräume im Bereich der Vorsprünge gewährleisten eine grosse radiale Verformbarkeit der Vorsprünge, so dass Bauteile, insbesondere Rohre mit unterschiedlichen Durchmessem mit einer Einlage im wesentlichen umgriffen werden können. Die Hohlräume bewirken eine Schalldämpfung, die einen nahezu geräuschfreien Transport von Medium ermöglicht. Die bei einer Längsverschiebung eines Rohres an der Einlage auftretenden Reibkräfte werden mit Hilfe einer zumindest auf den Vorsprüngen aufgebrachten reibungsmindemden Beschichtung weitestgehend eliminiert.

Eine elastische Einlage, deren Vorsprünge zweckmässigerweise wenigstens zwei parallel zueinander verlaufende Hohlräume aufweist, besitzt besonders gute Schall-dämpfungseigenschaften.

Für die Festlegung von Rohren mit unterschiedlichen Durchmessem eignen sich elastische Einlagen, deren Hohlräume vorzugsweise in Bezug auf die Höhe der Vorsprünge übereinander angeordnet sind. Dadurch werden die übereinanderliegenden Hohlräume beim Zusammenziehen der Rohrschelle gleichmässig zusammengedrückt.

Mit elastische Einlagen, deren Hohlräume vorteilhafterweise unterschiedliche Querschnitte haben, kann das Verformungsverhalten der Vorsprünge bei der Festlegung von Rohren beeinflusst werden. So sind Hohlräume mit grossem Querschnitt leichter verformbar als Hohlräume mit kleinem Querschnitt.

Einlagen, deren dem Rohr näher liegende Hohlräume einen kleineren Querschnitt aufweisen, lassen sich weniger verformen als wie die darunter liegenden Hohlräume mit grossem Querschnitt. Auf diese Weise bleibt der dem Rohr zugewandte Teil der Aussenkontur der Vorsprünge in seiner ursprünglichen Form im wesentlichen erhalten. Aufgrund der geringen Kontaktfläche zwischen den mit einer reibungsmindernden Beschichtung versehenen Vorsprüngen und dem Rohr ist eine Versetzung des Rohres gegenüber einer festgezogenen Rohrschelle, die auch "Gleichtschelle" genannt wird, möglich. Gleitschellen besitzen in der Regel zwischen zwei parallel zueinander verlaufenden Flanschen ein Distanzelement, damit ein Zusammenziehen beider Flansche zur Gänze nicht möglich ist.

Auf der dem Verankerungsbereich gegenüberliegenden Seite des Basisbereiches sind in Längsrichtung verlaufende Rippen angeordnet, die von den Vorsprüngen überragt werden. Bei sogenannten "Fixpunktschellen" befindet sich kein Distanzelement zwischen den Flanschen, so dass die Rohrschelle weiter zusammengezogen werden kann. Vor dem endgültigen Festziehen der Rohrschelle dienen die mit einer reibungsmindemden Beschichtung versehenen Vorsprünge des Basisbereiches der leichten axialen Ausrichtung des zu befestigenden Rohres gegenüber der Rohrschelle bzw. gegenüber der Einlage. Beim endgültigen Festziehen der Rohrschelle umgreifen die zwischen den Vorsprüngen angeordneten, umlaufend ausgebildeten Rippen die Aussenwandung des Bauteiles bzw. des Rohres, so dass eine Verschiebung in Längsrichtung des Bauteiles bzw. des Rohres gegenüber der Rohrschelle und dem Untergrund nicht mehr möglich ist.

In Längsrichtung verlaufende Rippen können auch auf der dem Verankerungsbereich zugewandten Seite des Basisbereiches angeordnet sein. Diese Rippen haben die Funktion, mit entsprechenden, im wesentlichen umlaufend ausgebildeten Ausprägungen der Rohrschelle eine formschlüssige Verbindung einzugehen, damit die Einlage zusätzlich gegen Verschiebung in Längsrichtung des Rohres gesichert ist.

Die Erfindung wird nachstehend anhand von Zeichnungen, die ein Ausführungsbeispiel wiedergeben, näher erläutert. Es zeigen:
Fig. 1 eine ein Rohr umgebende, erfindungsgemässe Rohrschelle mit Einlage;
Fig. 2 einen Schnitt II-II durch die Rohrschelle gemäss Fig. 1; ohne Rohr
Fig. 3 das Detail III in Fig. 2 in Verbindung mit einem Rohr in vergrösserter Darstellung.

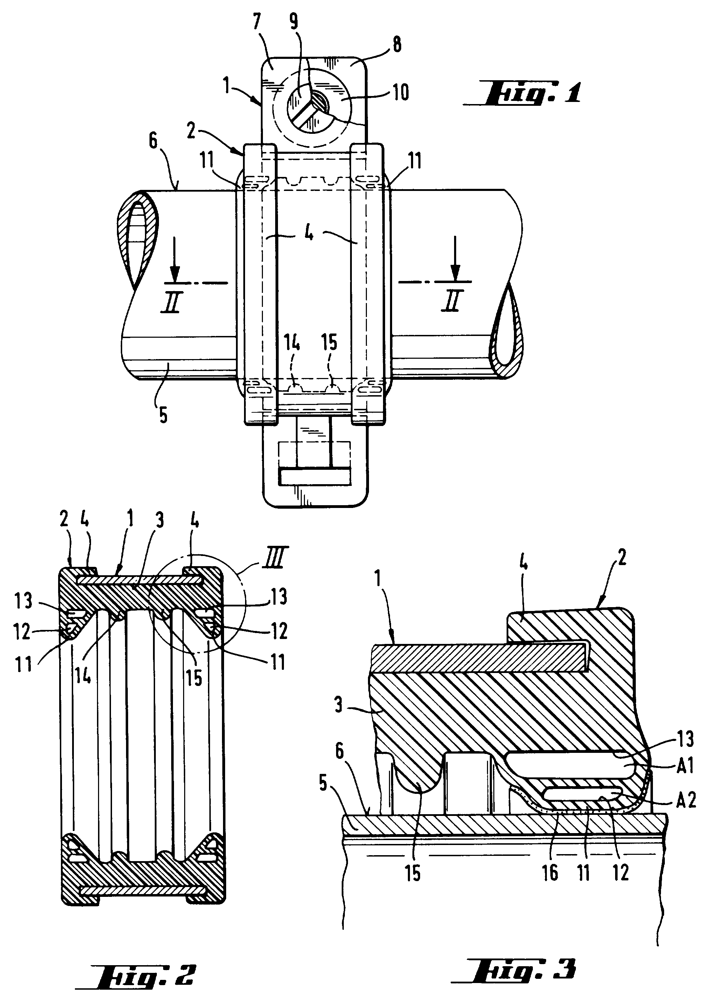

Die Fig. 1 zeigt eine Rohrschelle 1 mit einer Einlage 2, die mit Seitenbereichen 4 die Rohrschelle 1 teilweise umgreift und mit Vorsprüngen 11 eines Basisbereiches 3 an der Aussenwandung 6 eines Bauteiles in Form eines Rohres 5 anliegt. Zwischen zwei parallel zueinander verlaufenden Flanschen 7, 8, die mit einer Spannschraube 9 in Verbindung stehen, ist ein Distanzelement 10 angeordnet, so dass ein vollständiges Zusammenziehen beider Flansche 7, 8 verhindert wird. Ein axiales Verschieben des Rohres 5 gegenüber der Rohrschelle 1 und den Vorsprüngen 11 der Einlage 2 wird auf diese Weise erreicht.

Die in den Figuren 2 und 3 dargestellte, dem Rohr 5 zugewandte Seite des Basisbereiches 3 weist umlaufend ausgebildete Rippen 14, 15 auf, die zwischen den Vorsprüngen 11 angeordnet sind und von den Vorsprüngen 11 in der Höhe überragt werden. Die Vorsprünge 11 liegen streifenförmig an der Aussenwandung 6 des Rohres 5 an. Dadurch wird eine Reduzierung der Reibung des Rohres 5 gegenüber den Vorsprüngen 11 der Einlage 2 bewirkt und ein einwandfreies Anliegen der Einlage 2 an allfälligen Unebenheiten des Rohres 5, sowie eine Verbesserung der Wärmedämmung erreicht.

Die in den Randbereichen des Basisbereiches 3 der elastischen Einlage 2 angeordneten Vorsprünge 11 sind mit einer reibungmindernden Beschichtung 16 versehen. Der Basisbereich 3 weist im Bereich der Vorsprünge 11 zwei sich in Längsrichtung der elastischen Einlage 2 erstreckonde Hohlräume 12, 13 auf. Diese Hohlräume 12, 13 haben einen unterschiedlich grossen Querschnitt A1, A2, wobei der dem Rohr 5 am nächsten liegende Hohlraum 12 einen kleineren Querschnitt A2 aufweist, als der vom Rohr 5 weiter beabstandete Hohlraum 13. Beide Hohlräume 12, 13 sind gegenüber der dem Rohr 5 zugewandten Seite des Basisbereiches 3 im wesentlichen übereinander angeordnet.

Die Detailvergrösserung in Fig. 3 macht das Verformungsverhalten der Vorsprünge 12, 13 deutlich, wenn die Rohrschelle 1 festgezogen ist und die Vorsprünge 11 die Aussenwandung 6 des Rohres 5 umgreifen. Vom Durchmesser des Rohres 5 hängt es ab, wie stark die beiden Hohlräume 12, 13 des Basisbereiches 3 zusammengedrückt werden. Die Fig. 3 macht deutlich, dass der vom Rohr 5 weiter beabstandete Hohlraum 12 einen grösseren Querschnitt A2 hat und sich daher mehr verformt als der dem Rohr 5 am nächsten liegende Hohlraum 12.

Die Rohrschelle 1 sowie die Einlage 2 kann ein- oder mehrteilig ausgebildet sein. Die Rohrschelle 1 kann aus verschiedenen Materialien, insbesondere aber aus Stahlblech bestehen.

## Patentansprüche

1. Gummielastische Einlage für der Halterung von Rohren (5) und dergleichen Bauteile dienenden Rohrschellen (1), wobei ein Basisbereich (3) zum Umgeben der Bauteile und ein Verankerungsbereich (4) zum teilweisen Umgreifen der Rohrschelle (1) vorgesehen sind, sowie die vom Verankerungsbereich (4) abgewandte Seite des Basisbereiches (3) in den Randbereichen jeweils einen in Längsrichtung verlaufenden, eine reibungsmindernde Beschichtung (16) aufweisenden Vorsprung (11) aufweist und dass der Basisbereich (3) mit in Längsrichtung verlaufenden Rippen (14, 15) versehen ist, dadurch gekennzeichnet, dass die Vorsprünge (11) von wenigstens einem in Längsrichtung verlaufenden Hohlraum (12, 13) durchsetzt sind.

2. Rohrschelle nach Anspruch 1, dadurch gekennzeichnet, dass jeder Vorsprung (11) wenigstens zwei parallel zueinander verlaufende Hohlräume (12, 13) aufweist.

3. Rohrschelle nach Anspruch 1 oder 2, dadurch gekennzeichnet, dass die Hohlräume (12, 13) in bezug auf die der Vorsprünge (11) übereinander angeordnet sind.

4. Rohrschelle nach Anspruch 3, dadurch gekennzeichnet, dass die Hohlräume (12, 13) unterschiedliche Querschnitte (A1, A2) aufweisen.
